# EUROPEAN PATENT APPLICATION

(11) **EP 2 918 657 A1**
(43) Date of publication of application: **16.09.2015**
(21) Application number: 14181314.7
(22) Date of filing: 18.08.2014
(51) Int. Cl.: C09K 17/40

(54) **AGENT FOR IMPROVEMENT OF LIGHT SOIL PROPERTIES AND THE USE OF THE AGENT FOR IMPROVING THE LIGHT SOIL PROPERTIES**

(30) Priority: 14.03.2014 PL 40753214
(71) Applicant: Politechnika Lubelska, 20-618 Lublin (PL); Uniwersytet Przyrodniczy, 20-950 Lublin (PL)
(72) Inventor: Pawlowski, Lucjan, 20-710 Lublin (PL); Baran, Stanislaw, 20-448 Lublin (PL); Kwiatkowski, Zygmunt, 21-003 Ciecierzyn (PL); Pawlowska, Malgorzata, 20-710 Lublin (PL); Wesolowski, Marian, 20-807 Lublin (PL); Zukowska, Grazyna, 20-282 Lublin (PL); Wójcikowska-Kapusta, Anna, 20-337 Lublin (PL)
(74) Representative: Kaminski, Piotr

(57) **Abstract**

An agent for improving the properties of light soils and its use is disclosed wherein said agent contains drill cuttings obtained when drilling for and extracting shale gas, sewage sludge and spent mineral wool.

## Description

This invention concerns an agent for improvement of light soil properties and the use of the agent for improving the light soil properties.

Large quantities of mineral waste produced when drilling for shale gas are known as drill cuttings. These inert materials, on which virtually no vegetation can grow, are usually stored as burdensome waste. Although, it is true that attempts have been made to restore typical soil properties to these materials, they refer though to specific types of waste.

U.S. Patent No: 6419722B2 describes a method for making an artificial soil, according to which, 1-99% cellulose waste, 0.01-10% calcium compounds, 0.1-10% charcoal or other forms of carbon, and 0.05-5% ammonium nitrate, ammonium sulphate or calcium nitrate is added to the mineral waste. This mixture is then ground to obtain a homogenised mixture.

Admittedly such a mixture has properties similar to those of soils, but it is of limited use due to the low availability of cellulose waste. Furthermore, a large addition of up to 5% of well-dissolved salts poses a real groundwater contamination threat in form of the nitrate and ammonium ions.

U.S. Patent No. 5472475 describes a method of mixing sand and basalt with cellulose from recycled paper, composted human or animal waste, as well as waste from cereal crops, vegetable or fruit residuals. So obtained mixture is then mixed with calcium silicate or slag or quicklime and a solution of ammonium sulphate or nitrate, charcoal or an equivalent amount of sodium phosphate. This mixture takes on the properties of soil. The disadvantage of this method is its complex composition which undoubtedly increases the cost of preparing the artificial soil. Furthermore, the addition of leachable ammonium sulphate and nitrate threatens to contaminate the groundwater with undesirable ammonium and nitrate ions.

Another method is described in U.S. Patent No. 1871050, in which moistened paper pulp is added to the degraded soil surrounding the plant.

In turn, U.S. Patent No. 2881066 uses a mixture of nitrogen and phosphorus fertilisers mixed with wood-like waste, which takes on the role of humus substances whilst in U.S. Patent No. 2946675 wood-like waste was replaced with composted sawdust. In U.S. Patent No. 3356481 uncomposted sawdust was used for the same purpose. The disadvantage of this method is that it requires large quantities of sawdust, whilst the addition of soluble ammonium and phosphorous salts threatens groundwater contamination with these salts.

The essence of inventive method for improving the properties of light soils, with use of drill cuttings obtained when drilling for and extracting shale gas, sewage sludge, and spent mineral wool is that it is a mixture consisting of drill cuttings in the amount of 480-650 Mg ha⁻¹ having with pH value of 7.5 in 1 mol of KCl, a base cation sum of 17.0 cmol(+) kg⁻¹ and a 98% base cation saturation of the soil sorption complex, municipal sewage sludge in the amount of 30-60 Mg ha⁻¹ containing 194.8 g organic matter per kilogram with C_{org}:N_{org} = 6.9 and spent mineral wool in the amount of 400-600 m³ ha⁻¹ coming from horticultural crops, of a particularly high base cation content of 52.04 cmol(+) kg⁻¹ and a high water content of 1,450%.

The use of the agent to improve the properties of light soils which uses drill cuttings, sewage sludge, and spent mineral wool for creating a mixture consisting of drill cuttings in amount of 480-650 Mg ha⁻¹ and having a pH value of 7.5 in 1 mol of KCl, a base cation sum of 17.0 cmol(+) kg⁻¹ and a 98% base cation saturation of the soil sorption complex, municipal sewage sludge in the amount of 30-60 Mg ha⁻¹ and containing 194.8 g organic matter per kilogram with C_{org}:N_{org} = 6.9 and spent mineral wool in the amount of 400-600 m³ ha⁻¹ from horticultural crops having a particularly high base cation content of 52.04 cmol(+) kg⁻¹ and a high water content of 1,450%, is that it is dispersed using a manure spreader and then mixed with the deep-furrowed soil using a seedbed combinations. Black mustard is used as the covering vegetation.

The main advantage of the method according to invention is reduction in the acidity from 57 to 80% of the fertilised, light acidic soil. In addition there is an improvement in sorption capacity from 162 to 222% and in degree of basic cation saturation from 294 to 366%. Also increases the amount of available phosphorous, from 54% to 235%, and potassium from 110 to 570%, whilst at the same time water retention, soil granule aggregation and aeration also improves. In addition, the soil becomes more resistant to the action of destructive factors such as acidification and wind erosion. Improving the chemical and physico-chemical properties of the imperfect light soil increases the plant biomass yield by 168-422%.

An additional advantage is the rational use of drill cuttings, sewage sludge and spent mineral wool from horticultural crops. This invention is illustrated in the following examples of its application.

Example 1: A mixture was applied to an acidic light soil, which mixture consisted of: drill cuttings in the amount of 650 Mg ha⁻¹ with a pH value of 7.5 in 1 mol of KCl, a base cation sum of 17.0 cmol(+) kg⁻¹ and a 98% base cation saturation of the soil sorption complex, municipal sewage sludge in the amount of 30 Mg ha⁻¹ containing 194.8 g organic matter per kilogram with C_{org}:N_{org} = 6.9 and Grodan's spent mineral wool in the amount of 600 m³ ha⁻¹, from horticultural crops having a particularly high base cation content of 52.04 cmol(+) kg⁻¹ and a high water content of 1,450%.

The mixture was dispersed over 1 ha using a manure spreader and then mixed with deep-furrowed soil using a seedbed combinations - cultivator, disc harrow. Black mustard was used as the covering vegetation.

Example 2: A mixture was applied to an acidic light soil, which mixture consisted of drill cuttings in the amount of 480 Mg ha⁻¹ with a pH value of 7.5 in 1 mol of KCl, a base cation sum of 17.0 cmol(+) kg⁻¹ and a 98% base cation saturation of the soil sorption complex, municipal sewage sludge in the amount of 60 Mg ha⁻¹, containing 194.8 g organic matter per kilogram with C_{org}:N_{org} = 6.9 and Grodan's spent mineral wool in the amount of 400 m³ ha⁻¹ from horticultural crops having a particularly high base cation content of 52.04 cmol(+) kg⁻¹ and a high water content of 1,450%.
The mixture was dispersed over 1 ha using a manure spreader and then mixed with deep-furrowed soil using a seedbed combinations - cultivator, disc harrow. Black mustard was used as the covering vegetation.

Example 3: A mixture was applied to an acidic light soil, which mixture consisted of drill cuttings in the amount of 550 Mg ha⁻¹ with a pH value of 7.5 in 1 mol of KCl, a base cation sum of 17.0 cmol(+) kg⁻¹ and a 98% base cation saturation of the soil sorption complex, municipal sewage sludge in the amount of 45 Mg ha⁻¹ containing 194.8 g organic matter per kilogram with C_{org}:N_{org} = 6.9 and Grodan's spent mineral wool in the amount of 500 m³ ha⁻¹ from horticultural crops having a particularly high base cation content of 52.04 cmol(+) kg⁻¹ and a high water content of 1,450%.
The mixture was dispersed over 1 ha using a manure spreader and then mixed with deep-furrowed soil using a seedbed combinations - cultivator, disc harrow. Black mustard was used as the covering vegetation.

## Claims

1. An agent for improving the properties of light soils using drill cuttings obtained when drilling for and extracting shale gas, sewage sludge and spent mineral wool, is **characterised in that** it is a mixture consisting of drill cuttings in the amount of 480-650 Mg ha⁻¹ having a pH value of 7.5 in 1 mol of KCl, a base cation sum of 17.0 cmol(+) kg⁻¹ and a 98% base cation saturation of the soil sorption complex, municipal sewage sludge in the amount of 30-60 Mg ha⁻¹ containing 194.8 g organic matter per kilogram with C_{org}: N_{org} ratio being equal to 6.9, and spent mineral wool from horticultural crops in the amount of 400-600 m³ ha⁻¹ and having a particularly high base cation content of 52.04 cmol(+) kg⁻¹ and a high water content of 1450%.

2. The use of agent to improve the properties of light soils using drill cuttings obtained when drilling for and extracting shale gas, sewage sludge, and spent mineral wool which create a mixture consisting of drill cuttings in the amount of 480-650 Mg ha⁻¹ having a pH value of 7.5 in 1 mol of KCl, a base cation sum of 17.0 cmol(+) kg⁻¹ and a 98% base cation saturation of the soil sorption complex, municipal sewage sludge in the amount of 30-60 Mg ha⁻¹ and containing 194.8 g organic matter per kilogram with C_{org}N_{org} ration being equal to 6.9 and spent mineral wool from horticultural crops in the amount of 400-600 m³ ha⁻¹ and having a particularly high base cation content of 52.04 cmol(+) kg⁻¹ and a high water content of 1,450%, wherein it is dispersed using a manure spreader and then mixed with the deep-furrowed soil using a seedbed combinations while black mustard is used as the covering vegetation.
